# EUROPÄISCHE PATENTSCHRIFT

(11) **EP 1 953 018 B1**
(45) Veröffentlichungstag und Bekanntmachung des Hinweises auf die Patenterteilung: **17.03.2010**
(21) Anmeldenummer: 07002092.0
(22) Anmeldetag: 31.01.2007
(51) Int. Cl.: B60J 1/20, B60J 7/00

(54) **Führungssystem für ein Rollo eines Schiebedachsystems**
Guiding system for a roller blind of a sliding roof system
Système de guidage pour un store à enrouleur d'un toit ouvrant

(43) Veröffentlichungstag der Anmeldung: 06.08.2008
(73) Patentinhaber: ArvinMeritor GmbH, 63128 Dietzenbach (DE)
(72) Erfinder: Biewer, Christian, 64839 Altheim (DE); Eis, Dirk, 65817 Eppstein (DE); Böhm, Horst, 60599 Frankfurt/Main (DE)
(74) Vertreter: Prinz & Partner

(56) Entgegenhaltungen:
- WO-A-2006/053520
- DE-A1- 10 331 269
- DE-A1-102004 033 982
- DE-C1- 10 225 360

## Beschreibung

Die Erfindung betrifft ein Führungssystem für ein Rollo eines Schiebedachsystems nach dem Oberbegriff des Anspruchs 1.

Ein in einer Führungsschiene verschiebbares Rollo kann unterhalb einer Öffnung in einem Fahrzeugdach angebracht sein, um die Öffnung je nach Wunsch der Fahrzeuginsassen mehr oder weniger abzudecken. Wenn die Öffnung freigegeben sein soll, ist das Rollo auf einer Wickelachse aufgewickelt. Von dieser kann es abgezogen werden, so daß es die Öffnung abdeckt. Dieser Vorgang kann sowohl manuell als auch elektrisch erfolgen. Damit das Rollo, wenn es sich unterhalb der Öffnung im Fahrzeugdach befindet, nicht in den Fahrzeuginnenraum hinein durchhängt, sollen die Längsränder des Rollos so in Führungsschienen aufgenommen sein, daß es quer zur Verschieberichtung gespannt gehalten werden kann. Letzteres ist aus optischen Gründen unerwünscht, ferner soll das Flattern des Rollos verhindert werden.

Damit das Rollo zwischen den Führungsschienen ohne großen Aufwand gespannt gehalten werden kann, ist aus der DE 10 2004 033 982 A1 eine Führungsschiene bekannt mit einem elastischen, federnden Verbindungsabschnitt aus Kunststoff, der einen Halteabschnitt, mittels dem die Führungsschiene an einem Fahrzeug befestigt werden kann, und einen Führungsabschnitt, in dem das Rollo aufgenommen ist, federnd miteinander koppelt. Der Verbindungsabschnitt bewirkt ein Spannen des Rollos. In der Ausgangsstellung ist der Abstand zwischen den beiden seitlichen Führungsabschnitten für das Rollo größer als eigentlich notwendig. Wenn nun das Rollo längs der Führungsabschnitte verschoben wird, werden die beiden Führungsabschnitte näher zueinandergezogen; dabei gibt der Verbindungsabschnitt elastisch nach.

Ferner ist aus der gattungsgemäßen DE 103 31 269 A1 ein Führungssystem für ein Rollo bekannt, das mehrere an einem Rollo befestigte Führungselemente aufweist, die entlang einer Führungsschiene längsverschieblich gelagert sind. Zwischen den einzelnen Führungselementen und dem Rollo können hier Vorspanneinrichtungen angeordnet sein, die das Rollo quer zur Führungsschiene vorspannen.

Die Aufgabe der Erfindung besteht darin, ein weiteres Führungssystem bereitzustellen, das ein Rollo gespannt halten kann und kompakter baut.

Zu diesem Zweck sieht die Erfindung ein Führungssystem für ein Rollo eines Schiebedachsystems vor, mit einer feststehenden Führungsschiene, einem rollofesten Gleiter, der in Fahrzeuglängsrichtung verschieblich in der Führungsschiene aufgenommen ist und das Rollo trägt, und einer Vorspannvorrichtung, die zwischen der Führungsschiene und dem Gleiter angeordnet ist und bestrebt ist, den rollofesten Gleiter quer zur Fahrzeuglängsrichtung nach außen zu drücken, um das Rollo zu spannen. Die Erfindung beruht auf dem Grundgedanken, einen Toleranzausgleich in Form einer Vorspannvorrichtung kräftemäßig zwischen der Führungsschiene des Rollos und dem Gleiter vorzusehen. Die Vorspannvorrichtung drückt den rollofesten Gleiter quer zur Fahrzeuglängsrichtung nach außen, wodurch das Rollo gespannt wird. Fertigungsbedingte Größenschwankungen des Rollostoffes und thermisch bedingte Längenänderungen (Dehnung/Schrumpfung) quer zur Bewegungsrichtung des Rollos können durch die Vorspannvorrichtung ausgeglichen werden.

Vorzugsweise ist eine Zwischenführung vorgesehen, in der der rollofeste Gleiter geführt ist. Die Zwischenführung ist innerhalb der Führungsschiene angeordnet und insbesondere quer zur Fahrzeuglängsrichtung beweglich. Durch diese Ausgestaltung kann die Zwischenführung reibungsarm ausgeführt werden, wogegen bei der Vorspannvorrichtung besonders auf die Elastizität Wert gelegt werden kann.

Die Vorspannvorrichtung ist insbesondere örtlich und/oder kräftemäßig zwischen der Führungsschiene und der Zwischenführung angeordnet und wirkt auf die Zwischenführung, in der der rollofeste Gleiter geführt ist.

Die Zwischenführung wiederum ist bevorzugt quer zur Fahrzeuglängsrichtung beweglich in der Führungsschiene gelagert, was das System kompakt macht. Die Zwischenführung, die den rollofesten Gleiter aufnimmt, kann insbesondere quer zur Fahrzeuglängsrichtung verstellt werden.

Die Zwischenführung sollte sich zumindest großteils über den Verschiebeweg des Rollos erstrecken.

Bevorzugt sitzt die Zwischenführung in Fahrzeuglängsrichtung unverschieblich in der Führungsschiene. Die Zwischenführung, die quer zur Fahrzeuglängsrichtung, also in y-Richtung verschieblich ausgebildet ist, ist also mit dem daran befestigten Rollo in y-Richtung schwimmend gelagert.

Die Vorspannvorrichtung kann z.B. durch eine Stahlfeder gebildet sein.

Vorzugsweise weist die Vorspannvorrichtung aber einen elastischen Kunststoffkörper auf. Die Kraft, mit der das Rollo quer zur Fahrzeuglängsrichtung nach außen gezogen wird, ist durch die Härte des verwendeten Materials und/oder die Geometrie des Kunststoffkörpers einstellbar.

Der Kunststoffkörper ist z.B. aus EPDM gebildet.

Gemäß einer Ausführungsform ist der Kunststoffkörper im allgemeinen U-förmig und weist zwei Schenkel zur Erzielung der Vorspannkraft auf. Die Schenkel werden deformiert, um die Vorspannkraft zu erreichen.

In den Schenkeln des im allgemeinen U-förmigen Kunststoffkörpers ist wenigstens eine Ausnehmung vorgesehen. Die Ausnehmungen gewährleisten, daß der Kunststoffkörper elastisch komprimiert bzw. dekomprimiert werden kann, wobei durch die Anordnung und Ausführung der Ausnehmung die Federeigenschaft des Kunststoffkörpers eingestellt wird.

Insbesondere erstreckt sich die wenigstens eine Ausnehmung über die gesamte Länge des Kunststoffkörpers, so daß die Federeigenschaft des Kunststoffkörpers über die gesamte Länge gleich ist.

Vorzugsweise ist die Vorspannvorrichtung in Fahrzeuglängsrichtung lagefest in der Führungsschiene aufgenommen.

Die Vorspannvorrichtung sollte den rollofesten Gleiter aufnehmen, um einen Formschluß zu erreichen.

Gemäß einer Ausführungsform weist die Vorspannvorrichtung zwei Magnete auf, wobei ein elastischer Kunststoffkörper zwischen den beiden Magneten angeordnet ist und die Magnete eine seitlich nach außen wirkende Kraft zum Vorspannen des Rollos erzeugen. Bei den Magneten handelt es sich um zwei gegenpolige Magnete, die sich gegenseitig anziehen. Zwischen den Magneten ist der elastische Kunststoffkörper angeordnet, der durch die Anziehungskraft der beiden Magneten komprimiert wird und so eine Vorspannung auf den Deckel ausüben kann.

Vorzugsweise ist ein Teil der Vorspannvorrichtung in die Zwischenführung eingebettet. Da der rollofeste Gleiter in der Zwischenführung geführt ist, wird die Zwischenführung zusammen mit dem darin eingebetteten Magneten quer zur Fahrzeuglängsrichtung nach außen von dem zweiten Magneten gezogen.

Die Vorspannvorrichtung kann abschnittsweise entlang der Länge eines Verschiebeweges des Rollos vorgesehen sein.

Vorzugsweise ist die Vorspannvorrichtung aber über im wesentlichen die gesamte Länge eines Verschiebeweges des Rollos vorgesehen, so daß eine Kraft nach außen quer zur Fahrzeuglängsrichtung auf das Rollo über seinen gesamten Verschiebeweg wirkt.

Weitere Merkmale und Vorteile der Erfindung ergeben sich aus der nachfolgenden Beschreibung und den Zeichnungen. Die Erfindung wird nachfolgend anhand verschiedener Ausführungsformen beschrieben. In den Zeichnungen zeigen:
- Figur 1 eine perspektivische Ansicht eines Fahrzeugdaches mit einem Rollo, das in einem erfindungsgemäßen Führungssystem geführt ist;
- Figur 2 schematisch einen Schnitt entlang der Linie II-II von Figur 1 durch ein erfindungsgemäßes Führungssystem gemäß einer ersten Ausführungsform;
- Figur 3 schematisch einen Schnitt entlang der Linie II-II von Figur 1 durch ein erfindungsgemäßes Führungssystem gemäß einer zweiten Ausführungsform;
- Figur 4 schematisch einen Schnitt entlang der Linie II-II von Figur 1 durch ein erfindungsgemäßes Führungssystem gemäß einer dritten Ausführungsform;
- Figur 5 schematisch einen Schnitt entlang der Linie II-II von Figur 1 durch ein erfindungsgemäßes Führungssystem gemäß einer vierten Ausführungsform, und
- Figur 6 schematisch einen Schnitt entlang der Linie II-II von Figur 1 durch ein erfindungsgemäßes Führungssystem gemäß einer fünften Ausführungsform.

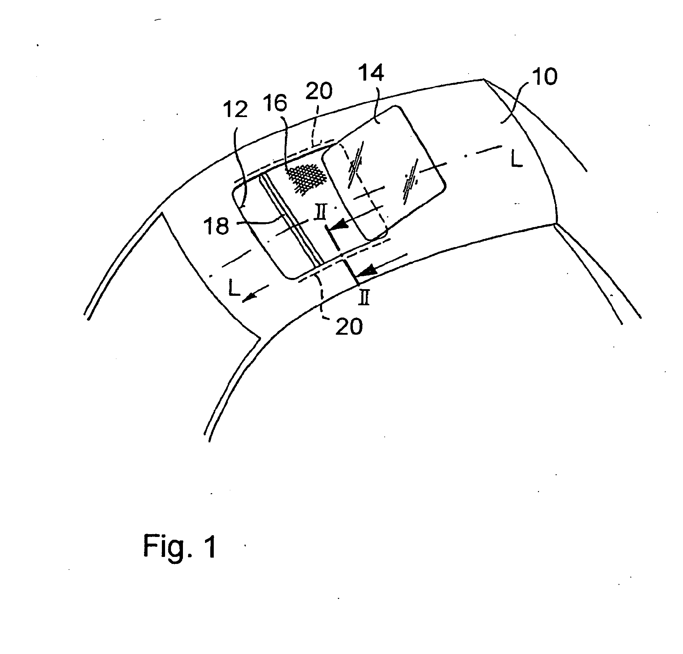

In Figur 1 ist ein Fahrzeugdach 10 zu sehen, welches mit einer Öffnung 12 versehen ist. Der Öffnung 12 ist ein Deckel 14 eines Schiebedachsystems zugeordnet. Der Deckel 14 kann zwischen einer geschlossenen Stellung, in welcher er die Öffnung 12 verschließt, und einer in Figur 1 gezeigten, geöffneten Stellung verstellt werden. Unterhalb des Deckels 14 und auch unterhalb der Öffnung 12 ist ein Rollo 16 angeordnet. Das Rollo 16 kann, bezogen auf das Fahrzeug, manuell oder von einem Motor angetrieben nach vorne (in Fahrzeugslängsrichtung L) und hinten (gegen die Fahrzeugslängsrichtung L) verschoben werden. Wenn das Rollo 16 vollständig nach hinten geschoben ist, ist die Öffnung 12 vollständig freigegeben. Frischluft und Sonnenlicht haben dann freien Zugang zum Fahrzeuginnenraum. Wenn das Rollo 16 vollständig nach vorne geschoben ist, ist die Öffnung 12 vom Rollo 16 abgedeckt. Frischluft und Sonnenlicht können somit nur in begrenztem Umfang in den Fahrzeuginnenraum gelangen.

Das Rollo 16 besteht aus einem flexiblen Material, beispielsweise Stoff oder einer Kunststofffolie. An seinem vorderen Rand ist ein Spriegel 18 vorgesehen, an dem ein Fahrzeuginsasse angreifen kann, um das Rollo 16 nach vorne oder hinten (in oder gegen die Fahrzeugslängsrichtung L) zu verschieben (bei manueller Ausführung). Seitlich entlang der Öffnung 12 erstrecken sich zwei Führungsschienen 20, in denen der Spriegel 18 über jeweils einen Gleiter 21 verschieblich aufgenommen ist.

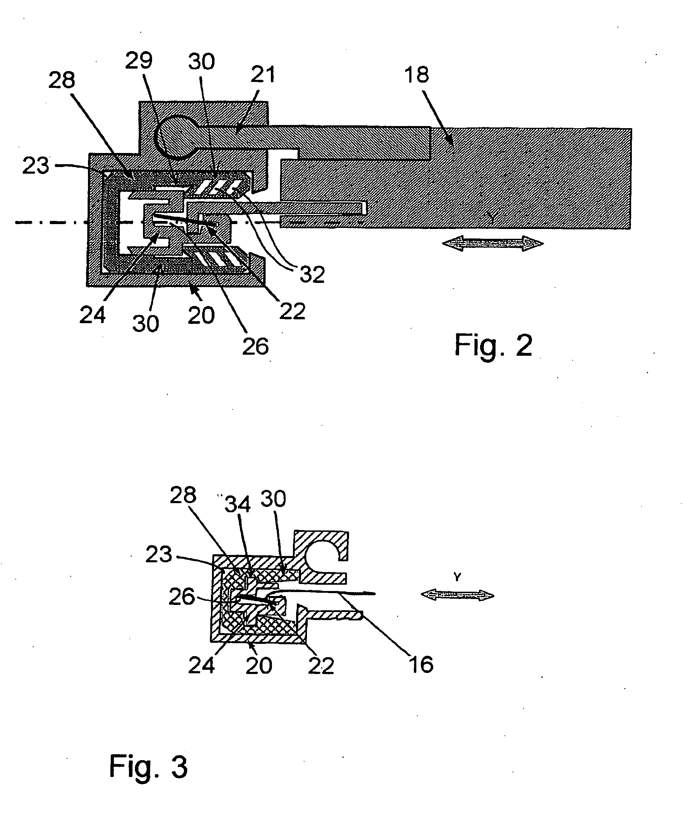

Unterhalb (bezüglich Figur 2) des Gleiters 21 sind in den Führungsschienen 20 die beiden Längsränder des Rollos 16, also in der Fahrzeuglängsrichtung L betrachtet der rechte und der linke Rand des Rollos 16, aufgenommen. Dazu weisen die Führungsschienen 20 jeweils eine zum Rollo 16 hin offene Ausnehmung 23 auf. Die Führungsschienen 20 sind insbesondere aus starrem Material wie Aluminium und nicht elastisch am Fahrzeug befestigt.

Entlang der Längsränder des Rollos 16, also in dem den Führungsschienen 20 zugeordneten Bereich, ist jedes Rollo 16 mit einem Gleiter 22 versehen, der als dünner, sich über die gesamte Länge des Rollos 16 erstreckender Metall- oder Kunststoffstreifen ausgeführt ist und der bestrebt ist, sich spiralförmig aufzuwickeln, wodurch die Aufwickelkraft für das Rollo 16 bereitgestellt wird.

Der Gleiter 22 ist verschieblich in einem Führungsabschnitt 26 einer Zwischenführung 24 aufgenommen, die sich im wesentlichen entlang des gesamten Verschiebeweges des Rollos 16 erstreckt. Die Zwischenführung 24 ist in Fahrzeuglängsrichtung L unverschieblich in der Führungsschiene 20 aufgenommen und quer zur Fahrzeuglängsrichtung L beweglich in der Führungsschiene 20 gelagert.

Die Zwischenführung 24 ist von einer Vorspannvorrichtung 28 umgeben, die lagefest in der Führungsschiene 20 aufgenommen ist und sich entlang des gesamten Verschiebeweges des Rollos 16 erstreckt. Die Vorspannvorrichtung 28 ist ein elastischer, im wesentlichen U-förmiger Kunststoffkörper 29, der insbesondere aus EPDM gebildet ist und zwei Schenkel 30 hat, die an der Führungsschiene 20 anliegen. In der Vorspannvorrichtung 30 ist die Zwischenführung 24 formschlüssig aufgenommen. Verdichte Enden der Schenkel der U-förmigen Vorspannvorrichtung 30 dienen als einwärts wirkende Anschläge und als innenseitige Führung für die Zwischenführung 24. Die Maßabstimmung von Rollo 16 und dem Führungssystem ist so gewählt, dass die Schenkel 30 im Bereich des Rollos 16 stets in Querrichtung elastisch komprimiert werden, so dass sie die Zwischenführung 24 mit dem Gleiter 22 und dem Rollo 16 nach außen quer zur Fahrzeugslängsrichtung L drücken. In den Schenkeln 30 sind Ausnehmungen 32 zur Erhöhung der Elastizität vorgesehen. Figur 2 zeigt jeweils drei (im Querschnitt gesehen) als Parallelogramme ausgebildete Ausnehmungen 32. Die Ausnehmungen 32 erstrecken sich im wesentlichen über die gesamte Länge des Kunststoffkörpers 29.

Die zwischen der Führungsschiene 20 und der Zwischenführung 24 angeordnete Vorspannvorrichtung 28, deren Schenkel 30 sich an einem inneren Teil der Führungsschiene 20 abstützen, übt eine Kraft quer zur Fahrzeuglängsrichtung L auf die Zwischenführung 24 aus. Die von der Vorspannvorrichtung 28 ausgeübte, quer zur Fahrzeuglängsrichtung L nach außen wirkende Kraft hält das Rollo 16 gespannt. Aufgrund der Elastizität der Vorspannvorrichtung 28 verbleiben die auf das Rollo 16 ausgeübten Spannkräfte auf einem vergleichsweise niedrigen Niveau, so daß nur geringe Reibungskräfte zwischen dem Gleiter 22 des Rollos 16 und der Zwischenführung 24 auftreten. Die von der Vorspannvorrichtung 28 ausgeübten Kräfte können durch die Härte des verwendeten Kunststoffs und die Anzahl und Form der Ausnehmungen 32 eingestellt werden.

In Figur 3 ist ein zweite Ausführungsform eines Führungssystems gezeigt. Für die von der ersten Ausführungsform bekannten Bauteile werden dieselben Bezugszeichen verwendet, und es wird insoweit auf die obigen Erläuterungen verwiesen.

Der wesentliche Unterschied zwischen der ersten und der zweiten Ausführungsform besteht darin, daß bei der zweiten Ausführungsform die Vorspannvorrichtung 28 keine Ausnehmungen 32 aufweist. Die Dicke der Schenkel 30 der Vorspannvorrichtung 28 nimmt zum Rollo 16 hin ab, um die Elastizität zu erhöhen. Die Zwischenführung 24 ist in Einkerbungen 34 der Vorspannvorrichtung 28 formschlüssig aufgenommen. Über diese Einkerbungen 34 werden die seitlichen Vorspannkräfte der Schenkel 30 auf die Zwischenführung 24 übertragen.

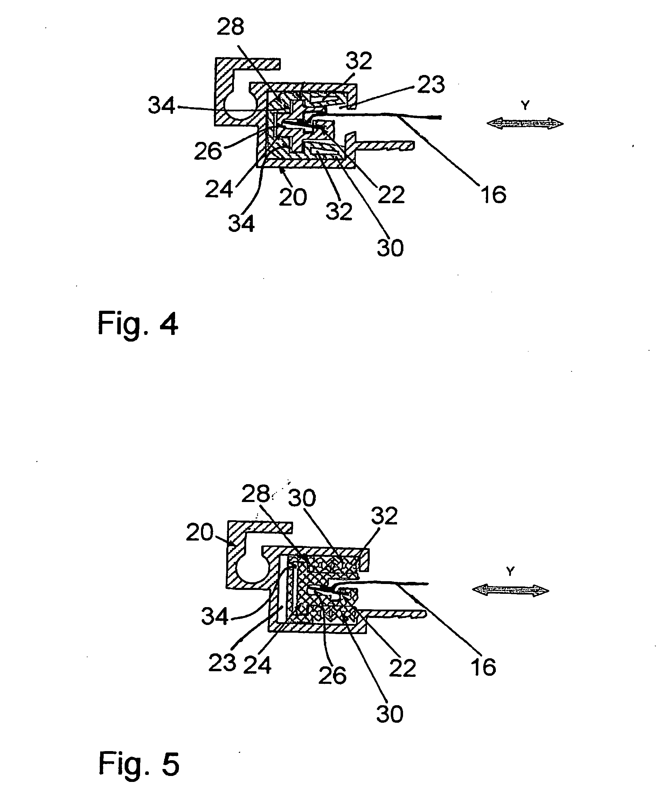

In Figur 4 ist eine dritte Ausführungsform gezeigt. Für die von der ersten und der zweiten Ausführungsform bekannten Bauteile werden dieselben Bezugszeichen verwendet, und es wird insoweit auf die obigen Erläuterungen verwiesen. Die dritte Ausführungsform unterscheidet sich von der zweiten Ausführungsform nur darin, daß jeweils eine große Ausnehmung 32 in jedem Schenkel 30 vorgesehen ist, wobei auch hier die Dicke der Schenkel 30 zum Rollo 16 hin abnimmt.

In Figur 5 ist eine vierte Ausführungsform gezeigt. Für die bereits bekannten Bauteile werden weiterhin dieselben Bezugszeichen verwendet.

Die Schenkel 30 des im wesentlichen U-förmigen Kunststoffkörpers 29 sind balgartig ausgebildet. Jeder Schenkel 30 besteht im wesentlichen aus vier sich überlappenden Rauten und weist vier Ausnehmungen 32 auf.

Der linke Rand der Vorspannvorrichtung 28 liegt in der gezeigten Stellung nicht an der Führungsschiene 20 an. Die Vorspannvorrichtung 28 ist nämlich hier in einer Stellung gezeigt, bei der die Schenkel 30 sehr stark komprimiert sind.

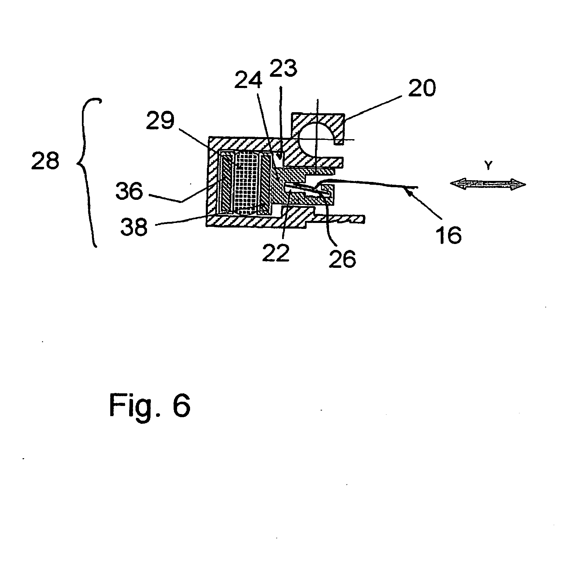

In Figur 6 ist eine fünfte Ausführungsform gezeigt. Die fünfte Ausführungsform unterscheidet sich von den bereits bekannten Ausführungsformen darin, daß die Vorspannvorrichtung 28 einen (im Querschnitt gesehen) rechteckigen Kunststoffkörper 29 und zwei Magnete 36, 38 aufweist, wobei der elastische Kunststoffkörper 29 zwischen den beiden Magneten 36, 38 vorgesehen ist. Der (bezüglich Figur 6) linke Magnet 36 ist an der Führungsschiene 20 angebracht. Der (bezüglich Figur 6 rechte) Magnet 38 ist in die Zwischenführung 24 eingebettet. Die zwei gegenpoligen Magnete 36, 38 oder zahlreiche hintereinander angeordnete Magnete 36, 38 erstrecken sich über die gesamte Länge des Verschiebeweges des Rollos 16 und ziehen sich gegenseitig an.

Die gegenseitige Anziehungskraft der Magnete 36, 38 drückt den dazwischenliegenden Kunststoffkörper 29 zusammen. Der (bezüglich Figur 6) rechte Magnet kann sich so in y-Richtung verstellen und dadurch eine Spannkraft auf das Rollo 16 ausüben. Die erzielte Spannkraft kann über die Härte des Kunststoffkörpers 29 und über die Anziehungskraft der insbesondere elektromagnetischen Magneten 36, 38 eingestellt werden.

Der (bezüglich Figur 6) linke Magnet 36 muß nicht zwingend an der Führungsschiene 20 angebracht sein.

### Bezugszeichenliste

- 10: Fahrzeugdach
- 12: Öffnung
- 14: Deckel
- 16: Rollo
- 18: Spriegel
- 20: Führungsschiene
- 21: Gleiter
- 22: Gleiter
- 23: Ausnehmung
- 24: Zwischenführung
- 26: Führungsabschnitt
- 28: Vorspannvorrichtung
- 29: Kunststoffkörper
- 30: Schenkel
- 32: Ausnehmung
- 34: Einkerbung
- 36: Magnet
- 38: Magnet
- L: Fahrzeuglängsrichtung

## Patentansprüche

1. Führungssystem für ein Rollo eines Schiebedachsystems, mit einer feststehenden Führungsschiene (20), einem rollofesten Gleiter (22), der in Fahrzeuglängsrichtung (L) verschieblich in der Führungsschiene (20) aufgenommen ist und das Rollo (16) trägt, und einer Vorspannvorrichtung (28) um das Rollo (16) zu spannen, **dadurch gekennzeichnet, dass**, die Vorspanneinrichtung zwischen der Führungsschiene (20) und dem Gleiter (22) angeordnet und bestrebt ist, den rollofesten Gleiter (22) quer zur Fahrzeuglängsrichtung (L) nach außen zu drücken.

2. Führungssystem nach Anspruch 1, **dadurch gekennzeichnet, daß** eine Zwischenführung (24) vorgesehen ist, in der der rollofeste Gleiter (22) geführt ist.

3. Führungssystem nach Anspruch 2, **dadurch gekennzeichnet, daß** die Vorspannvorrichtung (28) zwischen der Führungsschiene (20) und der Zwischenführung (24) angeordnet ist.

4. Führungssystem nach Anspruch 2 oder 3, **dadurch gekennzeichnet, daß** die Zwischenführung (24) quer zur Fahrzeuglängsrichtung (L) beweglich in der Führungsschiene (20) gelagert ist.

5. Führungssystem nach einem der Ansprüche 2 bis 4, **dadurch gekennzeichnet, daß** sich die Zwischenführung (24) über den Verschiebeweg des Rollos (16) erstreckt.

6. Führungssystem nach einem der Ansprüche 2 bis 5, **dadurch gekennzeichnet, daß** die Zwischenführung (24) in Fahrzeuglängsrichtung (L) unverschieblich in der Führungsschiene (20) sitzt.

7. Führungssystem nach einem der vorhergehenden Ansprüche, **dadurch gekennzeichnet, daß** die Vorspannvorrichtung (28) einen elastischen Kunststoffkörper (29) aufweist.

8. Führungssystem nach Anspruch 7, **dadurch gekennzeichnet, daß** der Kunststoffkörper (29) aus EPDM gebildet ist.

9. Führungssystem nach Anspruch 7 oder Anspruch 8, **dadurch gekennzeichnet, daß** der Kunststoffkörper (29) im allgemeinen U-förmig ist und zwei Schenkel (30) zur Erzielung der Vorspannkraft aufweist.

10. Führungssystem nach Anspruch 9, **dadurch gekennzeichnet, daß** in den Schenkeln (30) des im allgemeinen U-förmigen Kunststoffkörpers (29) wenigstens eine Ausnehmung (32) vorgesehen ist.

11. Führungssystem nach Anspruch 10, **dadurch gekennzeichnet, daß** sich die wenigstens eine Ausnehmung (32) über die gesamte Länge des Kunststoffkörpers (29) erstreckt.

12. Führungssystem nach einem der vorhergehenden Ansprüche, **dadurch gekennzeichnet, daß** die Vorspannvorrichtung (28) in Fahrzeuglängsrichtung (L) lagefest in der Führungsschiene (20) aufgenommen ist.

13. Führungssystem nach einem der vorhergehenden Ansprüche, **dadurch gekennzeichnet, daß** die Vorspannvorrichtung (28) den rollofesten Gleiter (22) aufnimmt.

14. Führungssystem nach einem der vorhergehenden Ansprüche, **dadurch gekennzeichnet, daß** die Vorspannvorrichtung (28) zwei Magnete (36, 38) aufweist, wobei ein elastischer Kunststoffkörper (29) zwischen den beiden Magneten (36, 38) angeordnet ist und die Magnete (36, 38) eine seitlich nach außen wirkende Kraft zum Vorspannen des Rollos (16) erzeugen.

15. Führungssystem nach einem der vorhergehenden Ansprüche, soweit auf Anspruch 2 rückbezogen, **dadurch gekennzeichnet, daß** ein Teil der Vorspannvorrichtung (28) in die Zwischenführung (24) eingebettet ist.

16. Führungssystem nach einem der vorhergehenden Ansprüche, **dadurch gekennzeichnet, daß** die Vorspannvorrichtung (28) abschnittsweise entlang der Länge eines Verschiebeweges des Rollos (16) vorgesehen ist.

17. Führungssystem nach einem der vorhergehenden Ansprüche, **dadurch gekennzeichnet, daß** die Vorspannvorrichtung (28) über im wesentlichen die gesamte Länge eines Verschiebeweges des Rollos (16) vorgesehen ist.

18. Führungssystem nach einem der vorhergehenden Ansprüche, **dadurch gekennzeichnet, daß** der Gleiter (22) ein längs des Rollorandes angebrachter Metall- oder Kunststoffstreifen ist, das die Aufwickelkraft für das Rollo (16) bereitstellt.

## Claims

1. Guide system for a roller blind of a sliding roof system, with a fixed guide rail (20), a slider (22) which is fixed on the roller blind, is accommodated in the guide rail (20) in a manner such that it can be displaced in the longitudinal direction (L) of the vehicle and carries the roller blind (16), and a pretensioning device (28) in order to tension the roller blind (16), **characterized in that** the pretensioning device is arranged between the guide rail (20) and the slider (22) and endeavours to press the slider (22) fixed on the roller blind outwards transversely with respect to the longitudinal direction (L) of the vehicle.

2. Guide system according to Claim 1, **characterized in that** an intermediate guide (24) is provided, in which the slider (22) which is fixed on the roller blind is guided.

3. Guide system according to Claim 2, **characterized in that** the pretensioning device (28) is arranged between the guide rail (20) and the intermediate guide (24).

4. Guide system according to Claim 2 or 3, **characterized in that** the intermediate guide (24) is mounted in the guide rail (20) in a manner such that it can be moved transversely with respect to the longitudinal direction (L) of the vehicle.

5. Guide system according to one of Claims 2 to 4, **characterized in that** the intermediate guide (24) extends over the displacement path of the roller blind (16).

6. Guide system according to one of Claims 2 to 5, **characterized in that** the intermediate guide (24) sits in the guide rail (20) in a manner such that it cannot be displaced in the longitudinal direction (L) of the vehicle.

7. Guide system according to one of the preceding claims, **characterized in that** the pretensioning device (28) has a flexible plastic body (29).

8. Guide system according to Claim 7, **characterized in that** the plastic body (29) is formed from EPDM.

9. Guide system according to Claim 7 or Claim 8, **characterized in that** the plastic body (29) is generally U-shaped and has two limbs (30) for obtaining the pretensioning force.

10. Guide system according to Claim 9, **characterized in that** at least one recess (32) is provided in the limbs (30) of the generally U-shaped plastic body (29).

11. Guide system according to Claim 10, **characterized in that** the at least one recess (32) extends over the entire length of the plastic body (29).

12. Guide system according to one of the preceding claims, **characterized in that** the pretensioning device (28) is accommodated in the guide rail (20) in a manner such that it is positionally fixed in the longitudinal direction (L) of the vehicle.

13. Guide system according to one of the preceding claims, **characterized in that** the pretensioning device (28) accommodates the slider (22) which is fixed on the roller blind.

14. Guide system according to one of the preceding claims, **characterized in that** the pretensioning device (28) has two magnets (36, 38), with a flexible plastic body (29) being arranged between the two magnets (36, 38), and the magnets (36, 38) producing a laterally outwardly acting force for pretensioning the roller blind (16).

15. Guide system according to one of the preceding claims, if referred back to Claim 2, **characterized in that** part of the pretensioning device (28) is embedded in the intermediate guide (24).

16. Guide system according to one of the preceding claims, **characterized in that** sections of the pretensioning device (28) are provided along the length of a displacement path of the roller blind (16).

17. Guide system according to one of the preceding claims, **characterized in that** the pretensionig device (28) is provided over essentially the entire length of a displacement path of the roller blind (16).

18. Guide system according to one of the preceding claims, **characterized in that** the slider (22) is a metal or plastic strip which is fitted along the roller blind edge and provides the winding-up force for the roller blind (16).

## Revendications

1. Système de guidage pour un store à enrouleur d'un système de toit ouvrant, comprenant un rail de guidage fixe (20), un coulisseau (22) fixé au store à enrouleur, qui est reçu de manière déplaçable dans la direction longitudinale du véhicule (L) dans le rail de guidage (20) et qui porte le store à enrouleur (16), et un dispositif de précontrainte (28) pour tendre le store à enrouleur (16), **caractérisé en ce que** le dispositif de précontrainte est disposé entre le rail de guidage (20) et le coulisseau (22) et s'efforce de pousser le coulisseau (22) fixé au store à enrouleur transversalement à la direction longitudinale du véhicule (L) vers l'extérieur.

2. Système de guidage selon la revendication 1, **caractérisé en ce qu'**il est prévu un guidage intermédiaire (24) dans lequel est guidé le coulisseau (22) fixé au store à enrouleur.

3. Système de guidage selon la revendication 2, **caractérisé en ce que** le dispositif de précontrainte (28) est disposé entre le rail de guidage (20) et le guidage intermédiaire (24).

4. Système de guidage selon la revendication 2 ou 3, **caractérisé en ce que** le guidage intermédiaire (24) est monté dans le rail de guidage (20) de manière mobile transversalement à la direction longitudinale du véhicule (L).

5. Système de guidage selon l'une quelconque des revendications 2 à 4, **caractérisé en ce que** le guidage intermédiaire (24) s'étend sur la course de déplacement du store à enrouleur (16).

6. Système de guidage selon l'une quelconque des revendications 2 à 5, **caractérisé en ce que** le guidage intermédiaire (24) repose dans le rail de guidage (20) de manière immobile dans la direction longitudinale du véhicule (L).

7. Système de guidage selon l'une quelconque des revendications précédentes, **caractérisé en ce que** le dispositif de précontrainte (28) présente un corps en plastique élastique (29).

8. Système de guidage selon la revendication 7, **caractérisé en ce que** le corps en plastique (29) est formé d'EPDM.

9. Système de guidage selon la revendication 7 ou la revendication 8, **caractérisé en ce que** le corps en plastique (29) est généralement en forme de U et présente deux branches (30) pour réaliser la force de précontrainte.

10. Système de guidage selon la revendication 9, **caractérisé en ce que** l'on prévoit au moins un évidement (32) dans les branches (30) du corps en plastique (29) généralement en forme de U.

11. Système de guidage selon la revendication 10, **caractérisé en ce que** l'au moins un évidement (32) s'étend sur toute la longueur du corps en plastique (29).

12. Système de guidage selon l'une quelconque des revendications précédentes, **caractérisé en ce que** le dispositif de précontrainte (28) est reçu de manière fixée en position dans la direction longitudinale du véhicule (L) dans le rail de guidage (20).

13. Système de guidage selon l'une quelconque des revendications précédentes, **caractérisé en ce que** le dispositif de précontrainte (28) reçoit le coulisseau (22) fixé au store à enrouleur.

14. Système de guidage selon l'une quelconque des revendications précédentes, **caractérisé en ce que** le dispositif de précontrainte (28) présente deux aimants (36, 38), un corps en plastique élastique (29) étant disposé entre les deux aimants (36, 38) et les aimants (36, 38) produisant une force agissant latéralement vers l'extérieur pour précontraindre le store à enrouleur (16).

15. Système de guidage selon l'une quelconque des revendications précédentes, dans la mesure où elle se rapporte à la revendication 2, **caractérisé en ce qu'**une partie du dispositif de précontrainte (28) est encastrée dans le guidage intermédiaire (24).

16. Système de guidage selon l'une quelconque des revendications précédentes, **caractérisé en ce que** le dispositif de précontrainte (28) est prévu en partie le long de la longueur d'une course de déplacement du store à enrouleur (16).

17. Système de guidage selon l'une quelconque des revendications précédentes, **caractérisé en ce que** le dispositif de précontrainte (28) est prévu essentiellement sur toute la longueur d'une course de déplacement du store à enrouleur (16).

18. Système de guidage selon l'une quelconque des revendications précédentes, **caractérisé en ce que** le coulisseau (22) est une bande de métal ou de plastique montée le long du bord du store à enrouleur, qui fournit la force d'enroulement pour le store à enrouleur (16).
